Europäisches Patentamt

European Patent Office

Office européen des brevets

(11) Publication number: **0 090 973**
**B1**

(12) **EUROPEAN PATENT SPECIFICATION**

(45) Date of publication of patent specification: **23.07.86**

(21) Application number: **83102606.7**

(22) Date of filing: **21.04.80**

(51) Int. Cl.⁴: **B 22 D 11/06, B 22 D 19/14**

(54) **Process for producing multi-layered alloys.**

(30) Priority: **20.04.79 JP 52100/79 u**

(43) Date of publication of application:
**12.10.83 Bulletin 83/41**

(45) Publication of the grant of the patent:
**23.07.86 Bulletin 86/30**

(84) Designated Contracting States:
**CH DE FR LI NL**

(56) References cited:
**GB-A- 15 548**
**GB-A-2 003 772**
**US-A-3 295 173**
**US-A-3 971 123**

(73) Proprietor: **Kabushiki Kaisha Toshiba**
**72, Horikawa-cho Saiwai-ku**
**Kawasaki-shi Kanagawa-ken 210 (JP)**

(72) Inventor: **Shimanuki, Senji c/o Tokyo Shibaura**
**Denki K.K.**
**Sogo Kenkyusho, 1, Toshibacho Saiwa-ku**
**Kawasaki-shi Kanagawa-ken, 210 (JP)**
Inventor: **Inomata, Koichiro c/o Tokyo Shibaura**
**Denki K.K.**
**Sogo Kenkyusho, 1, Toshibacho Saiwa-ku**
**Kawasaki-shi Kanagawa-ken, 210 (JP)**

(74) Representative: **Henkel, Feiler, Hänzel & Partner**
**Möhlstrasse 37**
**D-8000 München 80 (DE)**

## Description

The present invention relates to a process for producing a multi-layered alloy having at least one layer of amorphous alloy, by ejecting from a nozzle a first molten metal onto a roller rotating at a high speed or onto a metal belt driven by the roller, and rotating the ejected metal with the roller for rapid cooling.

This application is a divisional application to the parent application 80 900 783.4 publication No. EP—A—0027473 which relates to a process for producing a multi-layered alloy having at least one layer of amorphous alloy, by ejecting from a nozzle a first molten metal onto one of a pair of rollers rotating at a high speed or onto a metal belt driven by the roller, and rotating the ejected metal with the rollers for rapid cooling. In this process two molten metal layers are formed on the rotating roller or the belt ejecting from a further nozzle a second molten metal different from said first metal onto said first molten metal for rapid cooling the two metal layers being then adhered under pressure by rolling them between said pair of rollers.

Various multi-layer alloys are laminated bodies of different metals (to include alloys hereinafter) are known in various fields, for such applications as bi-metals with two metals having different heat expansion ratios; cladding material consisting of beryllium copper which is excellent in mechanical strength, and a layer of a noble metal which is excellent in contact characteristics; magnetic wires consisting of beryllium copper and Permalloy (trade name); superconductive wires consisting of copper and a superconductive body; composite magnetic materials used in electrical switching machines; leads used in self-holding type lead switches and so on.

Recently, amorphous alloys obtained by rapidly cooling molten metal are receiving a lot of attention due to their particular electromagnetic and mechanical characteristics, and the application of such amorphous alloys in multi-layer alloys has been desired.

However, since conventional multi-layer alloys are manufactured by adhering two diferent kinds of metals by heating or pressing, electrodeposition, vacuum evaporation, plating, welding and so on, the process has been complex. Furthermore, the manufacture of a multilayer alloy including an amorphous alloy has involved the problem that adhering by heating cannot be performed. Thus, an effective, practical means for manufacturing a multi-layer alloy including an amorphous alloy has not been discovered yet.

A method has recently proposed by JA—A—53 106 634 according to which different kinds of molten metals are ejected on each of a pair of revolving rollers, and they are joined and adhered by the rollers for manufacturing a multi-layer amorphous alloy. However, according to this method, the distance between the nozzles for ejecting the two different kinds of metals must be made extremely small, obstructing the design, limiting the adhering conditions, and providing an impractical solution to the problem. Further, the joining of the two metal layers is performed only between a pair of rollers, so that the adhering time is short and the adhesion between the obtained layers of the multi-layer alloy is disadvantageously low.

A method to increase the thickness of metal strips which were made by causing molten metal to impinge in a stream upon the surface of a cooled rotating body is known from GB—A—15 548 AD 1913. These thicker strips are produced by causing a second stream of molten metal to impinge upon the strip produced in the aforementioned manner, and the resulting thickened strips could be further thickened by similarly applying a further stream of molten metal. This method, however, only describes the production of strips made of one material.

It is further known from US—A—3 971 123 a metallurgical process for the production of a semi-finished product for subsequent rolling or forging into a finished product, wherein a melt of molten steel is simultaneously and continuously formed on moving chill surfaces into a plurality of layers of substantially uniformly fine grain structure throughout the thickness of each layer and stripping the layers from the chill surfaces as they are formed, such layers are brought together in face-to-face contact when they are at the solidus temperature where the metal in the layers shows no apparent liquid at the surface but before it has developed sufficient plasticity for hot rolling and the contacting layers are pressed together.

Here also the production of strips made of only one material is described. Furthermore, each of the layers is formed on an own moving chill surface before the layers are brought together. The corresponding device therefore needs a plurality of rollers for producing the single layers.

The present invention has been made in consideration of this prior art and has for its object to provide a process for producing a multilayered alloy in which the adhesion is improved, the feeding positions of the molten metals can be freely chosen without any problems, and at least one layer of amorphous alloy is included.

The present invention therefore provides a process for producing a multi-layered alloy as defined in the beginning which is characterized in that two molten metal layers are formed on the rotating roller or belt by ejecting from a second nozzle a second molten metal different from said first metal onto said first molten metal layer for rapid cooling.

The present invention will now be described in more detail with reference to the accompanying drawings, in which

Fig. 1 is a partial section view schematically illustrating a device for producing a multi-layered alloy used in one embodiment of the present invention; and

Fig. 2 is a partial sectional view schematically illustrating a device for producing a multi-layered alloy used in another embodiment of the present invention.

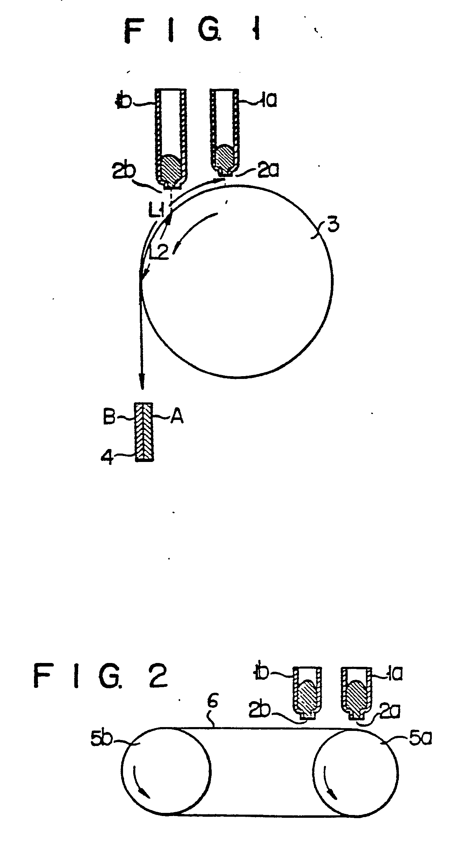

A device for carrying out the method of the present invention is shown in Fig. 1. Referring to Fig. 1, a first nozzle 2a and a second nozzle 2b are disposed at the lower ends of a first tubular container 1a and a second tubular container 1b of quartz glass tubes, respectively, for example, for holding two different kinds of raw material metals A and B molten by high frequency induction melting. Below these first and second nozzles 2a and 2b is disposed a roller 3. The molten metal A melted by the first tubular container 1a is ejected through the first nozzle 2a onto the roller 3 by the pressure of an inert gas. The ejected molten metal A is rapidly cooled by contacting the roller 3 rotating at a high speed and forms a lower layer consisting of amorphous metal A. Subsequently, the molten metal B melted by the second tubular container 1b is ejected on the lower layer of the amorphous metal A through the second nozzle 2a to form an upper layer of amorphous metal B. The two layers of metals thus laminated are rapidly cooled to provide a two-layer amorphous alloy 4 of excellent adhesion. Although the lower layer was a layer of an amorphous metal, it may alternatively be a crystalline metal layer.

For obtaining a multi-layer alloy of good quality, the upper and lower layers must not mix with each other. In order to make sure that the upper and lower layers do not mix with each other, the temperature $T_1$ of the lower layer of the amorphous metal A when the molten metal B of the upper layer is ejected on it must satisfy inequality (1) or (2) described below:

1. When the metal of the lower layer is an amorphous metal:

$$Tx < T_1 < Ts \qquad (1)$$

Tx: crystallizing temperature (C°)
Ts: solidifying temperature (C°)
When $T_1$ is higher than Ts, the lower layer metal A and the upper layer metal B mix together. When $T_1$ is lower than Tx, the lower layer metal becomes crystalline by contacting the molten metal B constituting the upper layer. The solidifying temperature Ts changes according to the cooling speed and is generally within the range shown below with respect to the cooling speed enabling amorphous:

$$Tm - 150°C < Ts < Tm - 50°C$$

where Tm is the melting point (C°)
$T_1$ is preferably in the range of $2/3 \, Tm \leq T_1 < Ts$, and more preferably in the range of $Ts - 100°C < T_1 < Ts$ (Tm of the alloy composition for obtaining an amorphous alloy is generally over 800°C and $2/3 \, Tm > Tx$).

2. When the lower layer metal is a crystalline metal:

$$2/3 \, Tm < T_1 < Ts \qquad (2)$$

where
Tm is the melting point.

When $T_1$ is higher than Ts, the lower layer metal A and the upper layer metal B mix together. When $T_1$ is lower than 2/3 Tm, the lower layer metal completely solidifies so that good adhesion may not be achieved.

Although $T_1$ is lower than Ts in both the cases described above, a multi-layer alloy of greater adhesion may be obtained when $T_1$ is as close to Ts as possible.

The above-mentioned $T_1$ may be calculated according to the Newton cooling equation as shown below:

$$T = T_B + (T_A - T_B)e - \frac{ht}{\rho Cpd}$$

where
$T_B$: roller temperature (C°)
A: temperature of molten metal (C°)
h: coefficient of heat transfer between the roller and the ejected metal
t: cooling time
$\rho$: density of the ejected metal
Cp: specific heat of the ejected metal
d: thickness of the metal layers

For determining the actual operating conditions, the times for ejecting the lower layer metal A and the upper layer metal B from the nozzles are determined from the above-mentioned temperature conditions, and the locations for ejecting the lower layer metal A and the upper layer metal B on the roller are determined from each time.

While determining these conditions, the rotating speed of the roller, the diameter of the roller, the pressure of the introduced gas, the diameter of the nozzles, the kinds of the raw material metals and so on must be considered. The ejecting location is defined by the length L of the arc from the contact point between the roller and a vertical line. When the time the ejected molten metal reaches this contact point is defined as t, the ejecting location L may be represented as follows:

$$L = \frac{\pi DNT}{60}$$

where
N: rotating speed of the roller (RPM)
D: diameter of the roller
t: time after ejecting

With the method described above, the temperature of the molten metal A ejected from the first nozzle 2a is lower than the solidifying temperature, but before completed solidification occurs, the molten metal B is ejected from the nozzle 2b. Thus, the respective molten metals A and B do not mix together between the two layers, so that a multi-layer amorphous alloy which is not mixed but sufficiently dispersed and greatly improved in adhesion may be obtained.

With the method and device as described above, the error in the positioning between the metal layers may be easily prevented.

In the above example, a device was used in which the molten metals A and B were supplied to the roller. However, as shown in Fig. 2, a device may alternatively be used in which a metal belt 6 is driven by a pair or rotary rollers 5a and 5b, the same tubular containers 1a and 1b as those of the device shown in Fig. 1 are disposed above the metal belt 6, and the molten metals are ejected from the nozzles 2a and 2b.

With this device, the roller diameter may be made smaller for ejecting the molten metal on the metal belt 6 so that the distance between the tubular containers 1a and 1b may be sufficient and the arrangement of these containers may become easy. Thus, the arrangement of the nozzles perpendicular to the belt which is the cooling body becomes easy, contact between the molten metals and the cooling body becomes good, and the cooling efficiency is improved so that the manufacture of the multi-layer alloy including amorphous metal becomes easy.

The present invention will now be described in more detail with reference to an example.

## Example A molten $Pd_{83.5}Si_{16.5}$ alloy at 1,000°C and a molten $Fe_{75}Si_{10}B_{15}$ alloy at 1,200°C were ejected on the belt at positions corresponding to immediately above the roller 5a and 20 mm away from it, respectively. The amount of the molten alloys ejected was 10 g in each case. The gas pressure was 0.5 atm. The nozzle diameter was 0.4 mm and the roller diameter was 100 mm. The rotational speed of the rollers was 3,000 rpm. The shape of the obtained thin strip was that of a ribbon of 1.3 mm width and 70 μm thickness. The section of the ribbon-shaped alloy strip was analyzed with an X-ray microanalyzer. The boundary between the $Pd_{83.5}Si_{16.5}$ layer and the $Fe_{75}Si_{10}B_{15}$ layer was sharp, and the alloys were found to be composite alloys of two layers. Both surfaces of the ribbon-shaped alloy strip were examined by X-ray diffractiometry and both were found to be amorphous. The separation test was performed with a bending test of 180 degrees. The boundary was slightly separated. However, no separation was observed when it was wound on a rod of 5 mm diameter. Thus, it was found that the composite alloy presents no problems in actual use. The temperature of the $Fe_{75}Si_{10}B_{15}$ alloy at the point where the $Pd_{83.5}Si_{16.5}$ alloy and the $Fe_{75}Si_{10}B_{15}$ overlapped was 950°C in this embodiment. This was higher than the crystallizing temperature (540°C) and was lower than the solidifying temperature (1,100°C).

## Comparative Example

A ribbon-shaped alloy strip of 1.2 mm width and 82 μm thickness wherein the molten $Ni_{75}Si_{10}B_{15}$ alloy was ejected on the point of the roller 3 corresponding to $L_1 = 70$ mm and the molten $Co_{75}Si_{10}B_{15}$ alloy was ejected on the point of an adjacent roller corresponding to a distance $L_2 = 40$ mm along the circumferential direction of the adjacent roller measured from the contact point between the two rollers. This alloy was examined with an X-ray microanalyzer and the layers was found to be separated. The alloys easily separated when a bending test of 180 degrees was performed.

As has been described, with the method of the present invention, it is easy to manufacture a multi-layer alloy which has at least one layer of amorphous alloy and which is especially strong in adhesion.

With the method of the present invention, more than three nozzles may be disposed above the roller for manufacturing a multi-layer alloy of three layers or more.

The process of the present invention for producing a multi-layered alloy having at least one amorphous layer is applicable to the production of various composite alloy materials such as high-sensitivity bimetals, super-conductive wires, contact spring composite alloys, latching relays having two-stepped magnetic hysteresis, and high fidelity magnetic heads.

## Claims

1. Process for producing a multi-layered alloy having at least one layer of amorphous alloy, by ejecting from a nozzle (2a) a first molten metal onto a roller (3) rotating at a high speed or onto a metal belt (6) driven by the roller, and rotating the ejected metal with the roller for rapid cooling; characterized in that two molten metal layers (A, B) are formed on the rotating roller (3) or belt (6) by ejecting from a second nozzle (2b) a second molten metal (B) different from said first metal (A) onto said first molten metal layer for rapid cooling.

2. Process according to claim 1, characterized in that said first molten metal and said second molten metal both form layers of amorphous metals.

3. Process according to claim 1, characterized in that said first molten metal forms a layer of crystalline metal and said second molten metal forms a layer of amorphous metal.

4. Process according to claim 2, characterized in that the temperature of said first molten metal when said second molten metal is ejected onto said first molten metal layer is higher that the crystallizing temperature of said first molten metal and lower than the solidifying temperature thereof.

5. Process according to claim 3, characterized in that the temperature of said first molten metal when said second molten metal is ejected onto said first molten metal layer is higher than 2/3 of the melting point of said first molten metal and lower than the solidifying temperature thereof.

## Patentansprüche

1. Verfahren zur Herstellung einer mehrschichtigen Legierung mit mindestens einer Schicht aus amorpher Legierung durch aus einer Düse (2a) erfolgendes Ausspritzen einer ersten Metallschmelze auf eine sich mit hoher Drehzahl drehende Walze (3) oder ein durch die Walze angetriebenes Band (6) und Umlaufenlassen des ausgespritzten Metalls mit der Walze zur schnellen Abkühlung, dadurch gekennzeichnet, daß auf der sich drehenden Walze (3) oder dem Band (6) zwei Metallschmelzeschichten (A, B) erzeugt werden, indem aus einer zweiten Düse (2b) eine zweite, vom ersten Metall (A) verschiedene Metallschmelze (B) auf die erste Metallschmelzeschicht zum schnellen Abkühlen ausgespritzt wird.

2. Verfahren nach Anspruch 1, daddurch gekennzeichnet, daß erste und zweite Metallschmelze jeweils Schichten amorpher Metalle bilden.

3. Verfahren nach Anspruch 1, dadurch gekennzeichnet, daß die erste Metallschmelze eine Schicht kristallinen Metalls und die zweite Metallschmelze eine Schicht amorphen Metalls bildet.

4. Verfahren nach Anspruch 2, dadurch gekennzeichnet, daß die Temperatur der ersten Metallschmelze beim Aufspritzen der zweiten Metallschmelze auf die erste Metallschmelzeschicht über der Kristallisationstemperatur der ersten Metallschmelze und unter ihrer Erstarrungstemperatur liegt.

5. Verfahren nach Anspruch 3, dadurch gekennzeichnet, daß die Temperatur der ersten Metallschmelze beim Aufspritzen der zweiten Metallschmelze auf die erste Metallschmelzeschicht höher als 2/3 des Schmelzpunkts der ersten Metallschmelze und niedriger als ihre Erstarrungstemperatur ist.

**Revendications**

1. Procédé de fabrication d'un alliage multicouche ayant au moins une couche d'un alliage amorphe, par éjection par une buse (2a) d'un premier métal fondu sur un cylindre (3) tournant à grande vitesse ou sur une courroie métallique (6) entraînée par le cylindre, et par entraînement en rotation du métal éjecté avec le cylindre afin qu'il se refroidisse rapidement, caractérisé en ce que deux couches (A, B) de métaux fondus sont formées sur le cylindre rotatif (3) ou sur la courroie (6) par éjection par une seconde buse (2b) d'un second métal fondu (B) différent du premier (A) sur la couche du premier métal fondu afin qu'il se refroidisse rapidement.

2. Procédé selon la revendication 1, caractérisé en ce que le premier métal fondu et le second métal fondu forment tous deux des couches de métaux amorphes.

3. Procédé selon la revendication 1, caractérisé en ce que le premier métal fondu forme une couche d'un métal cristallin et le second métal fondu forme une couche d'un métal amorphe.

4. Procédé selon la revendication 2, caractérisé en ce que la température du premier métal fondu, lorsque le second métal fondu est éjecté sur la couche du premier métal fondu, est supérieure à la température de cristallisation du premier métal fondu et inférieure à sa température de solidification.

5. Procédé selon la revendication 3, caractérisé en ce que la température du premier métal fondu, lorsque le second métal fondu est éjecté sur la couche du premier métal fondu, est supérieure aux 2/3 de la température de fusion du premier métal fondu et est inférieure à sa température de solidification.

# F I G. 1

# F I G. 2